# EUROPÄISCHE PATENTSCHRIFT

(11) **EP 1 246 429 B1**
(45) Veröffentlichungstag und Bekanntmachung des Hinweises auf die Patenterteilung: **26.12.2007**
(21) Anmeldenummer: 02360091.9
(22) Anmeldetag: 18.03.2002
(51) Int. Cl.: G06Q 30/00, H04L 29/06

(54) **Verfahren zur Unterstützung der Übermittlung von Informationen über ein Kommunikationssystem**
Method for supporting the transfer of information over a communication system
Méthode afin de supporter le transfert d'information à travers un système de communication

(30) Priorität: 27.03.2001 DE 10115031
(43) Veröffentlichungstag der Anmeldung: 02.10.2002
(73) Patentinhaber: Alcatel Lucent, 75008 Paris (FR)
(72) Erfinder: Weik, Hartmut, 70195 Stuttgart (DE); Krank, Lothar, 71254 Ditzingen (DE); Lautenschlager, Wolfgang, 71287 Weissach (DE); Stahl, Uwe, 71229 Leonberg (DE)
(74) Vertreter: Schmidt, Werner Karl

(56) Entgegenhaltungen:
- EP-A- 0 917 336
- US-A- 5 799 072
- US-A- 5 802 502

## Beschreibung

Die Erfindung betrifft ein Verfahren zur Unterstützung der Übermittlung von Informationen über ein Kommunikationssystem, das Kommunikationsnetze von zwei oder mehr Netzbetreibern umfaßt, wobei bei dem Verfahren vor der Übermittlung der Informationen eine Diensteinheit des Kommunikationssystems kontaktiert wird und hierbei der Diensteinheit eine Anforderung zur Übermittlung der Informationen mitgeteilt wird. Die Erfindung betrifft weiter eine Diensteinheit, einen elektronischer Agent, Softwareprodukte und Server zur Unterstützung der Übermittlung von Informationen über ein Kommunikationssystem, das Kommunikationsnetze von zwei oder mehr Netzbetreibern umfaßt.

Die Erfindung geht von einem Verfahren aus, wie es beispielsweise in EP 0 751 662 A2 beschrieben ist:

Ein Teilnehmer signalisiert einen eine gewünschte Verbindung spezifizierenden Verbindungswunsch über ein Endgerät an ein Kommunikationsnetz. Eine Dienstvermittlungsstelle des Kommunikationsnetzes triggert auf den Empfang dieser Signalisierungsnachricht eine Dienststeuereinheit und übermittelt dieser die Parameter der gewünschten Verbindung. Aus diesen Daten Ermittelt nun die Dienststeuereinheit Tariffierungsdaten, die die Kosten der gewünschten

Verbindung betreffen. Hierzu greift sie auf eine Datenbank zu, in der die Tarife verschiedener Netzbetreiber abgespeichert sind, und berechnet aus diesen Daten die Tariffierungsdaten. Die Tariffierungsdaten werden sodann an das Endgerät gesendet, bevor die gewünschte Verbindung aufgebaut wird. Der Teilnehmer kann so entscheiden ob oder über welchen Netzbetreiber er die Verbindung aufbaut. Weiter ist es der Dienststeuereinheit auch möglich, den günstigsten Netzbetreiber für die gewünschte Verbindung auszuwählen und den Verbindungsaufbau, nach Bestätigung durch den Teilnehmer, zu initiieren.

In der Patentanmeldung EP 0 917 336 A2 ist ein Vergleichs- und Auswahlsystem als Bestandteil eines telefonischen Markts offenbart, das nach Erhalt der Anforderung einer Telefonverbindung diese Anforderung an Netzbetreiber weiterleitet. Die Netzbetreiber geben daraufhin ein Angebot für die Bereitstellung der Telefonverbindung ab, und das Vergleichs- und Auswahlsystem stellt die Telefonverbindung über den günstigsten Netzbetreiber her. Zudem können die Netzbetreiber mehrfach aufgefordert werden, die bestehenden Angebote zu verbessern.

In der Patentschrift US 5 802 502 ist ein Kommunikationsnetzwerk offenbart, in dem eine sogenannte Nutzer-Verhandlungs-Ausrüstung mit einer Reihe von Service-Anbietern kommuniziert, um Daten bzgl. der Preise von den einzelnen Service-Anbietern zu erhalten, und in dem eine Service-Anbieter-Verhandlungs-Ausrüstung Preise generiert und diese der Nutzer-Verhandlungs-Ausrüstung mitteilt, die dann wiederum auf Grundlage der Preise einen Service-Anbieter auswählt.

Der Erfindung liegt die Aufgabe zugrunde, die Übermittlung von Informationen über ein Kommunikationssystem zu unterstützen, das Kommunikationsnetze von zwei oder mehr Netzbetreibern umfaßt.

Diese Aufgabe wird gelöst durch ein Verfahren nach der Lehre von Anspruch 1, durch eine Diensteinheit nach der Lehre von Anspruch 13, durch einen elektronischer Agent nach der Lehre von Anspruch 16, durch Softwareprodukte nach der Lehre von Anspruch 14 und 17 und durch Server nach der Lehre von Anspruch 15 und 18.

Der Erfindung liegt hierbei der Gedanke zugrunde, innerhalb eines Kommunikationssystems einen Dienst zur Verfügung zu stellen, der einen elektronischen Marktplatz für Informationsübermittlung betreibt. Auf diesem elektronischen Marktplatz können Netzbetreiber ihre elektronischen Agenten platzieren. Wird der Dienst für eine von Teilnehmerseite gewünschte Übermittlung von Informationen getriggert, so werden mittels dieser elektronischen Agenten die Bedingungen für diese angeforderte Informationsübermittlung individuell ausgehandelt. Der Dienst veranlaßt sodann die entsprechende Wegeleitung im Kommunikationssystem und der elektronische Agent, der den Zuschlag erhalten hat, übermittelt die individuell ausgehandelten Bedingungen an das Netzwerkmanagementsystem seines Netzbetreibers.

Der Vorteil der Erfindung besteht darin, daß sich die Bedingungen für eine Kommunikationsverbindung oder der Übermittlung einer bestimmten Datenmenge nicht mehr direkt aus einem generellen Tarifwerk ergeben, sondern jeweils individuell ausgehandelt sind und somit den augenblicklichen Interessen von Teilnehmern und Netzbetreibern besser entsprechen. Dies führt zum einen zu einer besseren Ausnutzung der Ressourcen der Netzbetreiber und zu einer gleichmäßigeren Ausnutzung des Kommunikationssystems und zum anderen zu günstigeren Nutzungskonditionen für Teilnehmer.

Vorteilhafte Ausgestaltungen der Erfindung sind den Unteransprüchen zu entnehmen.

Im folgenden wir die Erfindung anhand von Ausführungsbeispielen unter Zuhilfenahme beiliegender Zeichnungen beispielhaft erläutert.
- Fig. 1: zeigt ein Blockschaltbild eines Kommunikationssystems mit einem erfindungsgemäßen Server.
- Fig. 2: zeigt ein Blockschaltbild eines erfindungsgemäßen Servers gemäß eines ersten Ausführungsbeispiels.
- Fig. 3: zeigt ein Blockschaltbild mehrerer erfindungsgemäßer Server gemäß eines zweiten Ausführungsbeispiels.
- Fig. 4: zeigt eine funktionelle Darstellung mit einer erfindungsgemäßen Diensteinheit und mehreren erfindungsgemäßen elektronischen Agenten.

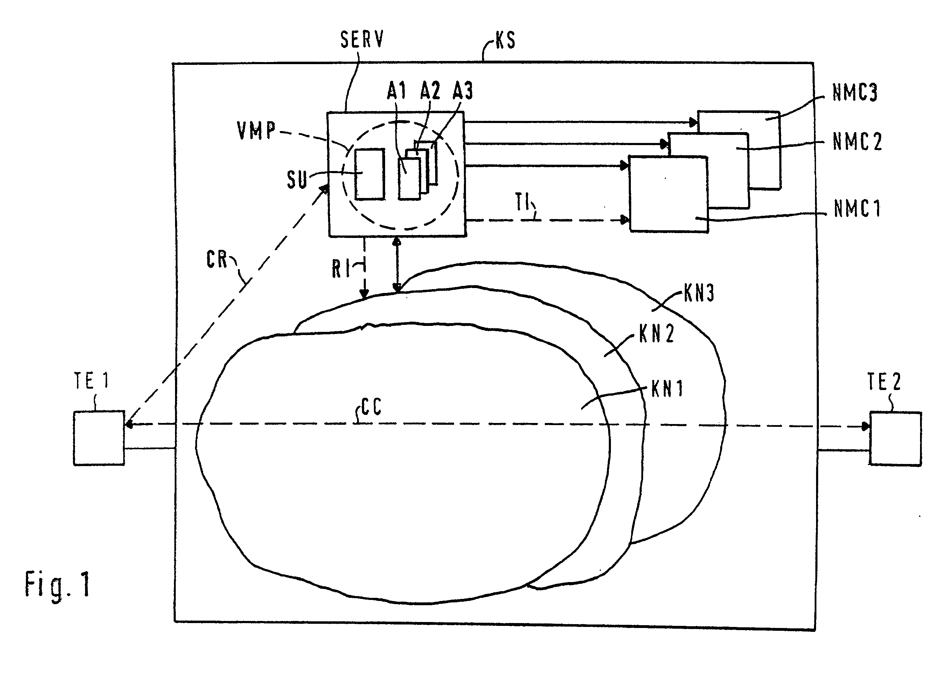

Fig. 1 zeigt ein Kommunikationssystem KS und mehrere mit dem Kommunikationssystem KS verbundene Endgeräte TE1 und TE2.

Bei den Endgeräten TE1 und TE2 handelt es sich um Fernsprechendgeräte wie Telephon, Fax oder Mobilfunk-Telephon. Es ist weiter möglich, daß es sich bei den Endgeräten TE1 und TE2 auch um andersartige Kommunikations-Endgeräte handelt, wie beispielsweise um Computer mit einer Schnittstellenkarte zur Datenkommunikation oder zur mobilen Datenkommunikation, um Multimedia-Terminals zur Sprach- Daten- und/oder Video-Kommunikation oder um einen Server zum Senden von Information, beispielsweise von Video- und Sprachinformationen, an eine Vielzahl von Empfängern.

Das Kommunikationssystem KS ist so ausgestaltet, daß es die Kommunikation zwischen den Endgeräten TE1 und TE2 ermöglicht. Im einfachsten Fall handelt es sich bei dem Kommunikationssystem KS um ein übliches Fernsprech-Kommunikationssystem, das mehrere miteinander verbunden Kommunikationsnetze umfaßt, die auch unterschiedlichen Netzebenen zugeordnet sein können.

Von den Kommunikationsnetzen des Kommunikationssystems KS sind in Fig. 1 beispielhaft drei Kommunikationsnetze KN1 bis KN3 gezeigt. Jedes der Kommunikationsnetze KN1 bis KN3 ist einem anderen Netzbetreiber zugeordnet, der das jeweilige Kommunikationsnetz betreibt und verwaltet. Die Kommunikationsnetze KN1 bis KN3 können ihrerseits jeweils aus einem oder mehreren Teilnetzen bestehen, beispielsweise aus ein oder mehreren optischen Backbone-Netzen, aus ein oder mehr Zugangsnetzen (beispielsweise Kabel-Netzen), aus ein oder mehreren darauf aufsetzenden IP-Netzen (IP = Internet-Protokoll), Fernsprechnetzen oder Mobilfunknetzen. Der genaue Aufbau der Kommunikationsnetze KN1 bis KN3 ist vorteilhafterweise an die von den Endgeräten TE1 bis TE3 benötigten Kommunikationsdienste anzupassen.

Das Kommunikationssystem KS weist weiter einen Server SERV und drei Netzwerkmanagementsysteme NMC1 bis NMC3 auf, mittels denen die Netzbetreiber der Kommunikationsnetze KN1 bis KN3 ihr jeweiliges Kommunikationsnetz KN1, KN2 bzw. KN3 verwalten und steuern.

Der Server SERV stellt ein oder mehrere Dienste in dem Kommunikationssystem KS bereit, die die Übermittlung von Informationen über das Kommunikationssystem KS unterstützen. Der Server SERV ist hierbei vorzugsweise einem von den Netzbetreibern der Kommunikationsnetze KN 1 bis KN3 unabhängigen Dienstbetreiber zugeordnet. Es ist jedoch auch möglich, daß der Server SERV einem Netzbetreiber zugeordnet ist und von diesem Betrieben wird.

Der Server SERV besteht aus einem oder mehreren über ein Kommunikationsnetz verbundenen Rechnern (Hardware-Plattform), aus einer auf dieser Hardware-Plattform aufsetzenden Software-Plattform, beispielsweise bestehend aus Betriebssystem, Datenbanksystem, Middelware Komponenten und einer ORB Plattform (ORB = Objekt Request Broker), beispielsweise einer CORBA Plattform (CORBA = Common Objekt Request Broker Architektur), und aus mehreren auf dieser Software-Plattform aufsetzenden Applikationsprogrammen. Durch den Ablauf der Applikationsprogramme auf der Software- und Hardware-Plattform des Servers SERV implementiert der Server SERV insbesonders die im Folgenden beschriebenen Funktionen einer Diensteinheit SU und zwei oder mehrerer elektronischer Agenten, von denen in Fig. 1 beispielsweise drei elektronische Agenten A1 bis A3 gezeigt sind. Die Steuermittel des Servers SERV, also Hardwareplattform, Softwareplattform und Applikationsprogramme erbringen so bei ihrem Zusammenwirken die Funktionen der Diensteinheit SU und der elektronischen Agenten A1 bis A3.

Das Endgerät TE1 sendet an das Kommunikationssystem KS eine Anforderungsnachricht zur Übermittlung von Informationen. Diese Anforderungsnachricht wird beispielsweise von einer speziellen Signalisierungsnachricht gebildet. Auf das Senden der Anforderungsnachricht wird in dem Kommunikationssystem KS die Diensteinheit SU kontaktiert und hierbei der Diensteinheit SU eine Anforderung CR zur Übermittlung der Informationen mitgeteilt.

Es ist hierbei zum einen möglich, daß das Endgerät TE1 die Anforderungsnachricht direkt an die Diensteinheit SU oder an den von der Diensteinheit SU bereitgestellten Dienst adressiert und die Anforderungsnachricht als Anforderung CR durch das Kommunikationsnetz KS an die Diensteinheit SU geleitet wird. Es ist auch möglich, daß ein Knoten eines der Kommunikationsnetze KN1 bis KN3 die Anforderungsnachricht als solche erkennt und daraufhin die Diensteinheit SU durch senden einer Triggernachricht kontaktiert. Die Triggernachricht oder einer der Triggernachricht folgende Nachricht, die die Anforderung des Endgerätes zur Informationsübermittlung zum Inhalt hat, stellt dann die Anforderung CR dar.

Dies kann beispielsweise mittels einer IN-Architekture realisiert werden: Das Endgerät TE1 signalisiert eine Verbindungsanforderung an das Kommunikationssystem KS, in der es den Aufbau einer Kommunikationsverbindung zu einer Rufnummer anfordert, die aus einem Prefix für den von der Diensteinheit SU bereitgestellten Dienst und der Rufnummer des Endgerätes TE2 besteht. Diese Verbindungsanforderung wird von einer Dienstvermittlungsstelle eines der Kommunikationsnetze KN1 bis KN3 anhand des Prefixes als Dienstanforderung erkannt. Die Dienstvermittlungsstelle sendet daraufhin an den Server SERV, der im Rahmen der IN Architektur die Funktion einer Dienststeuereinrichtung (SCP = Service Control Point) innehat, eine INAP Dienstanforderungsnachricht (INAP = Inelligent Network Application Protocol), die die Erbringung des Dienstes initiiert und dem Server SERV die Rufnummer des gerufenen Teilnehmers und des rufenden Teilnehmers als Spezifizierung der angeforderten Übermittlung von Informationen mitteilt. Diese Dienstanforderungsnachricht stellt hierbei die Anforderung CR dar.

Weiter ist es auch möglich, daß eine Logik innerhalb des Kommunikationssystems KS Anforderungen zur Übermittlung von Informationen, die bestimmte Kriterien erfüllen, erkennt und diese Anforderungen an die Diensteinheit SU weiterleitet. Kriterien hierfür sind beispielsweise Ursprungsendgerät, Zielendgerät, adressierter Kommunikationsdienst.

Die elektronischen Agenten A1 bis A3 interagieren mit der Diensteinheit SU im Rahmen eines virtuellen, elektronischen Marktplatzes für Informationsübermittlung VMP. Die elektronischen Agenten A1 bis A3 sind jeweils einem der Netzbetreiber der Kommunikationsnetze KN1, KN2 und KN3 zugeordnet und treffen Entscheidungen im Rahmen des elektronischen Marktplatzes für Informationen VMP mittels einer Entscheidungslogik gemäß von dem jeweiligen Netzbetreiber spezifizierten Kriterien.

Die Diensteinheit SU teilt, wenn ihr eine Anforderung zur Übermittlung von Informationen mitgeteilt wird, die Anforderung zur Übermittlung der Informationen den elektronischen Agenten A1 bis A3 mit. Wird ihr so beispielsweise mittels einer Dienstanforderungsnachricht die Anforderung CR mitgeteilt, so teilt sie den elektronischen Agenten A1 bis A3 die Anforderung CR mit, indem sie eine Nachricht an diese sendet, die die die Anforderung CR zum Inhalt hat. Es ist natürlich möglich, daß diese Nachricht noch weitere Informationen zum Inhalt hat oder den elektronischen Agenten A1 bis A3 die Anforderung CR durch mehrere Nachrichten mitgeteilt wird.

Die Diensteinheit SU fordert sodann die elektronischen Agenten A1 bis A3 durch Interaktion im Rahmen des elektronischen Marktplatzes VMP ein oder mehrfach auf, Angebote für die Ausführung der angeforderten Übermittlung von Informationen abzugeben. Die Aufforderung kann hierbei auch gleichzeitig mit der Mitteilung über die Anforderung CR and die elektronischen Agenten A1 bis A3 abgegeben werden, beispielsweise in dem sie auch die Mitteilung über die Anforderung CR zum Inhalt hat.

Wenn die elektronische Agent A1 bis A3 durch Interaktion im Rahmen des elektronischen Marktplatzes für Informationen VMP von der Diensteinheit SU aufgefordert werden, Angebote für die Ausführung der angeforderten Übermittlung von Informationen abzugeben, treffen sie jeweils mittels ihrer Entscheidungslogik gemäß den von dem jeweiligen Netzbetreiber spezifizierten Kriterien eine Entscheidung, ein Angebot auf diese Aufforderung abzugeben oder nicht. Wird ein solches Angebot von einem der elektronischen Agenten A1 bis A3 auf solche eine Aufforderung hin durch Interaktion im Rahmen des elektronischen Marktplatzes VPM abgegeben, so bestätig die Diensteinheit SU dieses Angebot diesem elektronischen Agent gegenüber als angenommen. Es ist hierbei natürlich möglich, daß die Diensteinheit SU nicht jedes Angebot sofort annimmt, sondern eine Auswahl zwischen verschiedenen Angeboten trifft.

Die Diensteinheit SU veranlaßt sodann die Übermittlung der Informationen über das Kommunikationsnetz des Netzbetreibers, dem der elektronische Agent zugeordnet ist, dessen Angebot sie bestätigt hat. Hierzu sendet sie beispielsweise eine entsprechenden Steuerbefehl an die Dienstvermittlungsstellen, von der sie die Dienstanforderungsnachricht erhalten hat. Diese Dienstvermittlungsstelle veranlaßt sodann den Aufbau einer entsprechenden Kommunikationsverbindung CC.

Derjenige elektronische Agent, dem gegenüber die Diensteinheit SU durch Interaktion im Rahmen des elektronischen Marktplatzes für Informationen VPM ein von ihm abgegebenes Angebot ihm gegenüber als angenommen bestätigt hat, übermittelt weiter die ausgehandelte Bedingungen für die Übertragung der Informationen, beispielsweise Bedingungen TI, an eine Netzwerkmanagementeinheit des Netzbetreibers, dem er zugeordnet ist. Die Netzwerkmanagementeinheit ist Teil des jeweiligen Netzwerkmanagementsystems NMC1 bis NMC2. Die Bedingungen TI beinhalten im einfachsten Fall die ausgehandelte Tariffierung für die Übermittlung der Informationen. In diesem Fall ist es vorteilhaft, daß die Netzwerkmanagementeinheit das Vergebührungssystem oder eine Teilfunktionalität des Vergebührungssystems des jeweiligen Netzbetreibers ist.

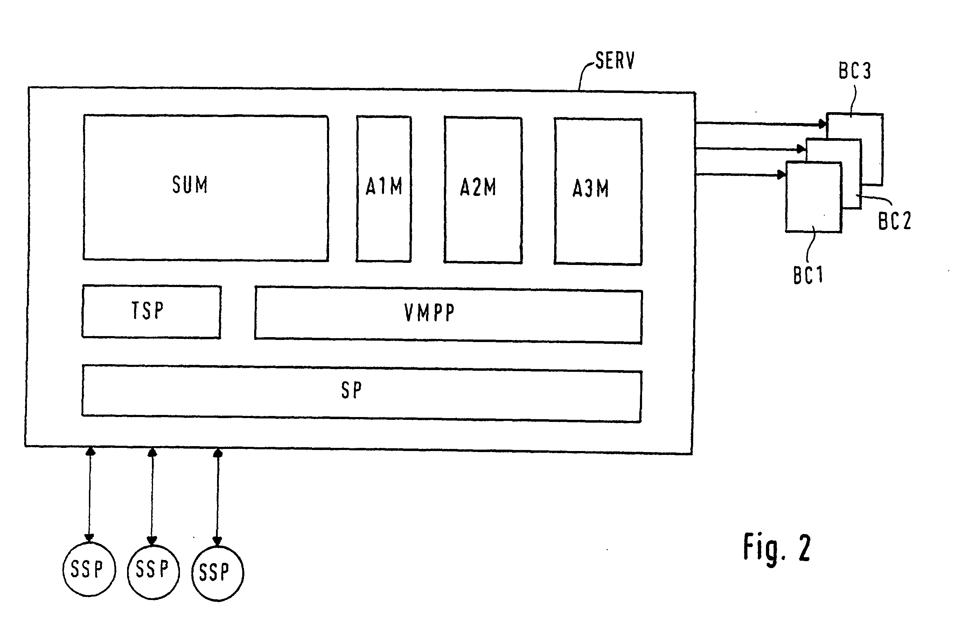

Anhand von Fig. 2 wird nun der detaillierte Aufbau des Servers SERV erläutert.

Fig. 2 zeigt den Server SERV, Netzwerkmanagementeinheiten BC1 bis BC3 und mehrere Dienstvermittlungsstellen SSP.

Die Netzwerkmanagementeinheiten BC1 bis BC3 stellen jeweils einen Vergebührungsserver des Kommunikationsnetzes KN1, KN2, bzw. KN3 dar. Dieser Server steuert für den jeweiligen Netzbetreiber die Vergebührung oder einen Teil der Vergebührung der Informationsübertragung durch das jeweilige Kommunikationsnetz KN1, KN2, bzw. KN3.

Die Dienstvermittlungsstellen SSP stellen jeweils Vermittlungsstellen der Kommunikationsnetze KN1 bis KN3 dar, die über eine Dienstvermittlungsfunktionalität gemäß der IN-Architektur verfügen.

Der Server SERV weist neben den bereits oben beschriebenen Hardware Komponenten mehrere Softwaremodule SP, TSP, VMPP, SUM, A1M, A2M und A3M auf, die jeweils von ein oder mehrere Computerprogrammen ,unter Umständen auch mit zugehörige Daten, gebildet werden.

Die Softwaremodule SP, TSP, VMPP, SUM, A1M, A2M und A3M stellen jeweils allein oder in Kombination mit einem der anderen Softwaremodule ein Softwareprodukt dar. Ein Softwareprodukt wird von ein oder mehrere Computerprogrammen als solchen, unter Umständen auch mit zugehörige Daten, gebildet.

Ein Softwareprodukt kann auch von einem oder mehreren Datenträgern gebildet werden, auf dem ein oder mehrere Computerprogrammen, unter Umständen auch mit zugehörige Daten, gespeichert sind. Damit stellt auch ein Datenträger, auf dem die Programme (unter Umständen auch Daten) eines der Softwaremodule SP, TSP, VMPP, SUM, A1 M, A2M und A3M gespeichert sind, ein Computerprodukt im Sinne der Erfindung dar.

Das Softwaremodul SP umfaßt die oben als Software-Plattform bezeichnete Software des Servers SERV.

Das Softwaremodul VMPP umfaßt Software, die es der Diensteinheit SU und den elektronischen Agenten A1 bis A3 ermöglicht, im Rahmen des virtuellen, elektronischen Marktplatzes für Informationsübermittlung VPM zu interagieren. Diese Software stellt den Beteiligten, also beispielsweise der Diensteinheit SU und den elektronischen Agenten A1 bis A3, diesen elektronischen Marktplatz für Informationsübermittlung zur Verfügung: Sie verwaltet diesen elektronischen Marktplatze und bildet die Plattform für diese Interaktion. In diesem Zusammenhang erbringt sie Funktionen wie beispielsweise die Verwaltung, Registrierung, Authentisierung der Beteilung und Verwaltung der Kommunikationsbeziehungen zwischen den Beteiligten. Weiter stellt sie den Beteiligten ein ganzes Bündel von Diensten zur Verfügung, mittels denen diese die Interaktionen abwickeln. Solche Dienste umfassen neben Interaktions- und Kommunikationsdiensten auch Dienste, die die Sicherheit- und Nachprüfbarkeit der über sie abgewickelten Interaktionen und durch Interaktionen mitgeteilte Erklärungen/Erklärungsinhalte sicherstellen.

Es ist hierbei vorteilhaft, daß das Softwaremodul VMPP Dienste bereitstellt, die es elektronischen Agenten ermöglichen, sich auf dem elektronischen Marktplatzes für Informationsübermittlung zu registrieren und ihre Software, beispielsweise die von den Softwaremodulen A1M umfaßte Software, auf dem Server SERV zu installieren. Nur solche registrierten elektronische Agent erhalten dann in der Folge Aufforderungen von der Diensteinheit SU und können über das Softwaremodul VMPP interagieren.

Das Softwaremodul TSP umfaßt Kommunikationssoftware, die es der Diensteinheit SU ermöglicht, einerseits von einem Netzelement eines der Kommunikationsnetze KN 1 bis KN3 kontaktiert zu werden und eine Anforderung zur Übermittlung von Informationen zu empfangen und andererseits Steuerbefehle an Netzelemente der Kommunikationsnetze KN1 bis KN3 zu senden. Das Softwaremodul TSP umfaßt so beispielsweise die Software zur Bearbeitung des INAP Protokolls und der darunter liegenden Protokollschichten, z. B. OSI Protokolle (OSI=Open System Interconnection) oder TCP/IP Protokolle (TCP= Transaction Capability Part.

Das Softwaremodul SUM umfaßt die Computerprogramme, die die Funktionen der Steuereinheit SU steuern. Diese Programme greifen hierzu einerseits auf Dienste des Softwaremoduls TSP und andererseits auf Dienste des Softwaremoduls VMPP zu. Das Softwaremodul SUM ist somit zum einen angepaßt an die Software-Schnittstellen der Softwaremodule TSP und

VMMPP und zum anderen angepaßt an das von dem Softwaremodul SP bereitgestellte API (=Application Program Interface). Bei seiner Ausführung auf der Hardwareplattform des Servers SERV führt das Softwaremodul SUM folgende Funktionen aus:

Wenn dem Softwaremodul SUM über das Softwaremodul TSP eine Anforderung zur Übermittlung von Informationen mitgeteilt wird, teilt es die Anforderung zur Übermittlung der Informationen zwei oder mehr elektronischen Agenten mit, die mit ihm im Rahmen eines von dem Softwaremodul VMPP bereitgestellten virtuellen, elektronischen Marktplatzes für Informationsübermittlung über das Softwaremodul VMPP interagieren. Weiter fordert das Softwaremodul SUM diese elektronischen Agent mittels Zugriff auf das Softwaremodul VMPP durch Interaktion im Rahmen des von dem Softwaremodul VMPP bereitgestellten elektronischen Marktplatzes ein oder mehrfach auf, Angebote für die Ausführung der angeforderten Übermittlung von Informationen abzugeben. Das Softwaremodul SUM bestätigt weiter ein von einem der elektronischen Agenten auf solche eine Aufforderung hin über das Softwaremodul VMPP durch Interaktion im Rahmen des von dem Softwaremodul VMPP bereitgestellten elektronischen Marktplatzes abgegebenes Angebot (OF) diesem elektronischen Agent (A1) gegenüber durch Interaktion über das Softwaremodul VMPP als angenommen. Sodann veranlaßt das Softwaremodul durch Zugriff auf Dienste des Softwaremoduls TSP die Übermittlung der Informationen über das Kommunikationsnetz des Netzbetreibers, dem dieser elektronische Agent zugeordnet ist.

Die Softwaremodul A1M bis A3M umfassen jeweils die Computerprogramme, die die Funktionen der elektronischen Agenten A1, A2, bzw. A3 steuern. Diese Programme greifen hierzu auf Dienste des Softwaremoduls VMPP zu. Damit sind die Softwaremodule A1M bis A3M zum einen angepaßt an die Software-Schnittstellen des Softwaremoduls VMMPP und zum anderen angepaßt an das von dem Softwaremodul SP bereitgestellte API (=Application Program Interface). Programmtechnisch ist es hierbei vorteilhaft die Softwaremodule A1M bis A3M mittels der sog. "Intelligent Agent" oder "Mobile Agent" Technologie zu realisieren.

Bei seiner Ausführung auf der Hardwareplattform des Servers SERV führt beispielsweise das Softwaremodul A1M folgende Funktionen aus:

Das Softwaremodul A1M interagiert über das Softwaremodul VMPP mit einer Diensteinheit, die ihm Anforderungen zur Übermittlung von Informationen mitteilt, im Rahmen eines von dem Softwaremodul VMPP bereitgestellten virtuellen, elektronischen Marktplatzes für Informationsübermittlung. Es trifft Entscheidungen im Rahmen des elektronischen Marktplatzes für Informationen mittels einer Entscheidungslogik gemäß Kriterien, die dem Softwaremodul A1M gegenüber von einem Netzbetreiber, dem es zugeordnet ist, spezifiziert worden sind. Für das Softwaremodul A1M ist dies der Netzbetreiber des Kommunikationsnetzes KN1. Wenn das Softwaremodul A1M durch Interaktion im Rahmen des von dem Softwaremodul VMPP bereitgestellten elektronischen Marktplatzes für Informationen über das Softwaremodul VMPP von der Diensteinheit aufgefordert wird, Angebote für die Ausführung der angeforderten Übermittlung von Informationen abzugeben, trifft es mittels der Entscheidungslogik gemäß der Kriterien eine Entscheidung, ein Angebot auf diese Aufforderung abzugeben oder nicht. Wenn die Diensteinheit durch Interaktion im Rahmen des von dem Softwaremodul VMPP bereitgestellten elektronischen Marktplatzes für Informationen ein von ihm durch Interaktion über das Softwaremodul VMPP abgegebenes Angebot ihm gegenüber als angenommen bestätigt, so übermittelt es die ausgehandelte Bedingungen für die Übertragung der Informationen an die Netzwerkmanagementeinheit BC1.

In dem anhand von Fig. 2 beschriebenen Ausführungsbeispiel werden die Softwaremodul A1M bis A3M auf derselben Rechnerplattform wie das Softwaremodul SUM ausgeführt und laufen somit gemeinsam auf dem Server SERV ab.

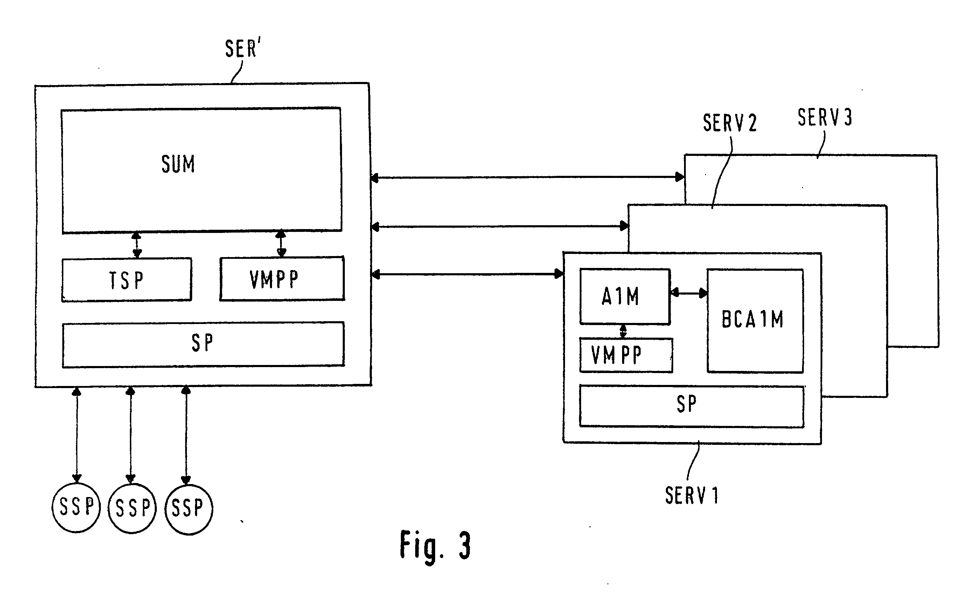

Eine Alternative hierzu, bei der die Softwaremodul A1M bis A3M auf einer ihrem jeweiligen Netzbetreiber zugeordneten Rechnerplattform ausgeführt werden, wird in Fig. 3 gezeigt.

Fig. 3 zeigt vier Server SERV' und SERV1 bis SERV3 und die Dienstvermittlungsstellen SSP. Der Server SERV' weist die Softwaremodul SP, VMPP, TSP und SUM auf, die wie die entsprechenden Softwaremodule nach Fig. 2 ausgebildet sind. Der Aufbau der Server SERV1 bis SERV3 ist beispielhaft anhand des Aufbaus des Servers SERV1 gezeigt. Der Server SERV1 weist die Softwaremodul A1M, VMPP, SP, die wie die entsprechenden Softwaremodule nach Fig. 2 aufgebaut sind, und ein Softwaremodul BCA1 auf.

Das Softwaremodul BCA1 M ist eine Vergebührungsapplikation, die die Vergebührung innerhalb des Kommunikationsnetzes KN1 steuern. Diese Applikation stellt in diesem Ausführungsbeispiel die Netzwerkmanagementeinheit dar, an die ausgehandelte Bedingungen übermittelt werden.

Im Gegensatz zu dem Ausführungsbeispiel nach Fig. 2 ist hier die von dem Softwaremodul VMPP gebildete Plattform über die Server SERV', SERV1 bis SERV3 verteilt. Die über verschiedene Server verteilten Teile des Softwaremoduls VMPP kommunizieren untereinander über ein Kommunikationsnetz, beispielsweise ein IP Netz. Weiter kann das Softwaremodul A1M direkt mit dem auf dem Server SERV1 ausgeführten Softwaremodul BCA1M interagieren und befindet sich im Einflußbereich des Netzbetreibers des Kommunikationsnetzes KN1.

Anhand von Fig. 3 wird nun die detailierte Funktionsweise der Diensteinheit SU, der elektronischen Agenten A1 bis A3 und der Softwaremodule SUM und A1M bis A3M verdeutlicht:

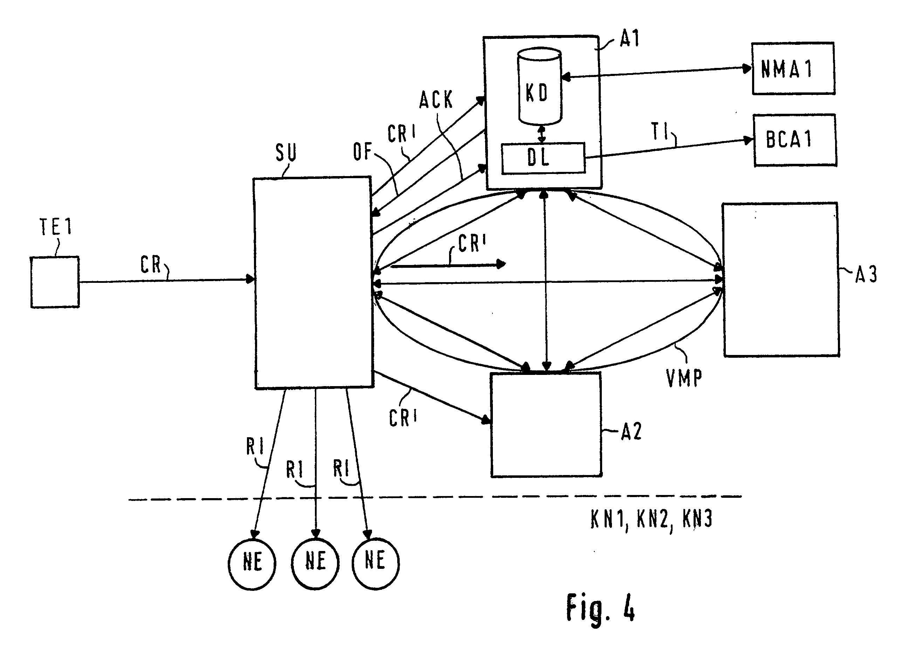

Fig. 4 zeigt das Endgerät TE1, die Diensteinheit SU, die elektronischen Agenten A1 bis A3, mehrere Netzelemente NE der Kommunikationsnetze KN1 bis KN3 und zwei Netzwerkmanagementeinheiten NMA1 und BCA1 des Kommunikationsnetzes KN 1.

Die Diensteinheit SU bekommt, wie bereits in dem Ausführungsbeispiel zu Fig. 1 beschrieben, eine Anforderung CR zur Übermittlung von Informationen mitgeteilt.

Diese Anforderung CR kann zum einen auf den Aufbau einer Kommunikationsverbindung zwischen einem rufenden Endgerät und einem oder mehreren gerufenen Endgeräten zur Übermittlung der Informationen über diese Kommunikationsverbindung gerichtet sein. Um diese Anforderung zu spezifizieren, enthält die Anforderung so beispielsweise die Kommunikationsadressen des rufenden und der gerufenen Endgeräte. Weiter ist es möglich, daß in der Anforderung bereits weitere Bedingungen für diese angeforderte Kommunikationsverbindung enthalten sind. Diese können sich auf die Art der Kommunikationsverbindung und den geforderten Kommunikationsdienst beziehen, beispielsweise eine paketorientiert, asynchrone Verbindung wie eine ATM Verbindung oder eine synchrone Verbindung wie eine klassische Telefonverbindung spezifizieren. Sie können sich auf die Bandbreite der Verbindung beziehen. Sie können sich auf die Zeitdauer oder die zu übertragende Datenmenge beziehen.

Weiter ist es auch möglich, daß die Anforderung CR anfordert, Informationen verbindungslos von einem ersten Endgerät zu einem oder mehreren zweiten Endgeräten zu übermitteln und damit eine klassische Datenübertragung spezifiziert. Auch hierbei können oben beschriebenen Bedingungen Teil der Anforderung sein.

Die Diensteinheit SU interagiert mit den elektronischen Agenten A1 bis A3 im Rahmen des virtuellen, elektronischen Marktplatzes für Informationsübermittlung VMP, der, wie oben dargestellt, von dem Softwaremodul VMPP bereitgestellt wird.

Die Diensteinheit SU teilt die ihr mitgeteilte Anforderung den elektronischen Agent A1 bis A3 mit und fordert sie durch Interaktion im Rahmen des elektronischen Marktplatzes VMP ein oder mehrfach auf, Angebote für die Ausführung der angeforderten Übermittlung von Informationen abzugeben.

So interagiert beispielsweise die Diensteinheit SU auf den Empfang der Anforderung CR jeweils eine Aufforderung CR' an die elektronischen Agenten A1 bis A3. Es ist hierbei vorteilhaft, daß die Aufforderung CR' die Mitteilung über den Empfang der Anforderung CR enthält.

Weiter ist es vorteilhaft, daß die Diensteinheit SU mit der Aufforderung, Angebote für die Ausführung der angeforderten Übermittlung von Informationen abzugeben, ein oder mehr Bedingungen für diese Übermittlung den elektronischen Agenten A1 bis A3 gegenüber spezifiziert. Die Aufforderung CR' kann hierzu beispielsweise die in der Anforderung CR enthaltenen Bedingungen für die Informationsübertragung und weitere Bedingung enthalten.

Die den elektronischen Agenten A1 bis A3 gegenüber spezifizierten Bedingungen können die Art und Weise der Übermittlung der Informationen spezifizieren: Neben den bereits oben angeführten Bedingungen sind solche Bedingungen beispielsweise Datenrate, Übertragungszeit, Art der Daten: "stream" orientier, z. B. für video on demand, "peak" orientiert, max. geforderter Durchsatz, Priorität der Daten.

Die den elektronischen Agenten A1 bis A3 gegenüber spezifiziert Bedingungen können auch die Vergebührung der Übermittlung der Informationen spezifizieren, beispielsweise Art der Vergebührung, Vergebührungskonditionen, Höhe der Gebührenrate oder Gesamthöhe der Gebühren.

Der elektronische Agent A1 weist eine Entscheidungslogik DL und einen Datensatz mit Kriterien KD auf. Die Kriterien KD sind von dem Netzbetreiber, dem er zugeordnet ist, spezifiziert. Beispielsweise können die Kriterien KD von der Netzwerkmanagementeinheit NMA1 modifiziert und aktualisiert werden. Der elektronische Agent A1 trifft Entscheidungen im Rahmen des elektronischen Marktplatzes für Informationen VMP mittels dieser Entscheidungslogik DL und dieser Kriterien KD. Die Entscheidungslogik DL stellt beispielsweise eine Expertensystem dar, wie es im Bereich der "Intelligent Agents" verwendet wird. Die Kriterien KD bilden die Basis für die Entscheidungen der Entscheidungslogik DL. Beispielsweise bestimmten die Kriterien die Strategie der Entscheidungslogik DL gegenüber den anderen elektronischen Agenten, einen Spielraum für akzeptierbare Bedingungen, Netzauslastung, freie Ressourcen des Kommunikationsnetzes KN1, Wertung und Gewichtung von Bedingungen.

Wenn die Diensteinheit SU nacheinander mehrere Aufforderungen an die elektronischen Agenten abgibt, ist es vorteilhaft, daß sie die jeweils verbundenen ein oder mehreren Bedingungen sukzessive verändert, bis einer der elektronischen Agenten A1 bis A3 ein Angebot abgibt. Im einfachsten Fall erhöht sie so sukzessive die Gebühr, die der Netzbetreiber für die Übermittlung der Informationen erhalten soll und gibt demjenigen Netzbetreiber den Zuschlag, der als erster ein entsprechendes Angebot abgibt.

Wenn der elektronische Agent A1 durch Interaktion im Rahmen des elektronischen Marktplatzes für Informationen VMP durch die Aufforderung CR' von der Diensteinheit SU aufgefordert wird, ein Angebot für die Ausführung der angeforderten Übermittlung von Informationen abzugeben, so trifft er mittels der Entscheidungslogik DL gemäß der Kriterien KD die Entscheidung, ein Angebot auf die Aufforderung CR' abzugeben oder nicht.

Es ist hierbei zum einen möglich, daß der elektronische Agent A1 auf die Aufforderung CR' ein Angebot unter den in der Aufforderung CR' angegebenen Bedingungen abgibt. Es ist aber auch möglich, daß die Entscheidungslogik DL ihrerseits Bedingungen ermittelt, und diese eigenen Bedingungen dem Angebot zugrunde legt. Die Entscheidungslogik DL kann somit auch neben der Entscheidung -Angebot ja oder nein- auch Bedingungen für ein Angebot ermitteln. Dies ist insbesondere vorteilhaft, wenn die in der Aufforderung CR' enthaltenen Bedingungen nicht abschließend sind.

Ermittelt die Entscheidungslogik DL, ein Angebot abzugeben, so gibt der elektronische Agent durch Interaktion im Rahmen des elektronischen Marktplatzes für Informationen VMP ein Angebot OF gegenüber der Diensteinheit SU ab. Das Angebot OF kann hierbei keine Bedingungen enthalten und sich nur auf die Aufforderung CR' beziehen. Das Angebot OF kann aber auch ein oder mehr Bedingungen für diese Übermittlung der Diensteinheit SU gegenüber spezifiziert. Diese Bedingungen können die mit der Aufforderung CR' verbundenen Bedingungen sein, es können jedoch auch, wie oben dargelegt, von der Entscheidungslogik selbst ermittelte Bedingungen sein.

Die Diensteinheit SU werte die ein oder mehreren auf die Aufforderung CR' abgegebenen Angebot der elektronischen Agenten A1 bis A3 aus. Sie prüft, ob die Angebote jeweils akzeptierbar sind und wählt bei mehreren verbleibenden Angeboten dasjenige aus, was vorgegebenen Kriterien am besten entspricht. Diese Kriterien können hierbei auch abhängig von dem Profil des Dienstnutzers sein oder von dem Dienstnutzer individuell vorgegeben werden.

Das auf diese Weise selektierte Angebot bestätigt die Diensteinheit SU durch Interaktion im Rahmen des elektronischen Marktplatzes VMP demjenigen elektronischen Agent gegenüber, der es abgegeben hat, als angenommen.

Im einfachsten Fall bestätig die Diensteinheit SU ohne Prüfung dasjenige Angebot, das ihr als erstes nach Abgabe der Aufforderung CR' zugeht.

Wird der Diensteinheit SU gegenüber innerhalb einer bestimmten Zeitspanne auf die Aufforderung CR' kein Angebot von einem elektronischen Agenten A1 bis A3 abgegeben, so fordert die Diensteinheit SU die elektronischen Agenten durch eine neue, vorteilhafterweise inhaltlich geänderte Aufforderung auf, erneut Angebote abzugeben.

Dieser Vorgang wird mehrmals wiederholt oder für eine bestimmte Zeitspanne wiederholt. Danach wird die Durchführung des Dienstes abgebrochen.

In dem Ausführungsbeispiel nach Fig. 4 gibt der elektronische Agent A1 auf die Aufforderung CR' durch Interaktion im Rahmen des elektronischen Marktplatzes VMP ein Angebot OF ab. Die Diensteinheit SU bestätigt mit einer Bestätigung ACK durch Interaktion im Rahmen des elektronischen Marktplatzes VMP dem elektronischen Agenten A1 gegenüber das Angebot OF als angenommen. Die Diensteinheit SU veranlaßt sodann die Übermittlung der Informationen über das Kommunikationsnetz KN1, also über das Kommunikationsnetz des Netzbetreibers, dem der elektronische Agent A1 zugeordnet ist. Hierzu sendet sie entsprechende Routing-Informationen RI an Netzelemente NE, die eine entsprechende Wegeleitung der Informationen durch das Kommunikationssystem KS steuern. Netzelemente NE sind hierbei, je nach Art der Kommunikationsnetze KN1 1 bis KN3, beispielsweise Vermittlungsstellen, Cross-Connects, Router und Bridges. Es ist auch möglich, daß die Diensteinheit die Routing-Informationen RI dem Endgeräte TE1 mitteilt und auf diese Weise die Übermittlung der Informationen über das Kommunikationsnetz dieses Netzbetreibers veranlaßt.

Der elektronische Agent A1 übermittelt bei Empfang der Bestätigung ACK ausgehandelte Bedingungen TI für die Übertragung der Informationen über das Kommunikationsnetz an die Netzwerkmanagementeinheit BCA1. Diese Bedingung können die Bedingung sein, die mit dem Angebot OF verbunden sind. Es ist jedoch auch möglich, daß die Bedingungen TI nur einen Teil dieser Bedingungen darstellen, beispielsweise nur die gebührenbezogenen Bedingungen beinhalten.

Es ist weiter möglich, daß elektronischen Agenten auf die Aufforderung CR' hin durch Interaktion im Rahmen des elektronischen Marktplatzes abgegebene Angebote nur eine teilweise Übermittlung der Informationen betreffen und daß die Diensteinheit SU mehrere solcher Angebote bestätigt, so daß sich eine vollständige Übermittlung der Informationen ergibt. Damit erfolgt die Übermittlung der Informationen über die Kommunikationsnetze verschiedener Netzbetreiber.

## Patentansprüche

1. Verfahren zur Unterstützung der Übermittlung von Informationen über ein Kommunikationssystem (KS), das Kommunikationsnetze (KN1 bis KN3) von zwei oder mehr Netzbetreibern umfaßt, wobei bei dem Verfahren vor der Übermittlung der Informationen eine Diensteinheit (SU) des Kommunikationssystems kontaktiert wird und hierbei der Diensteinheit (SU) eine Anforderung (CR) zur Übermittlung der Informationen mitgeteilt wird
**dadurch gekennzeichnet, daß** die Diensteinheit (SU) die Anforderung zur Übermittlung der Informationen zwei oder mehr elektronischen Agenten (A1 bis A3) mitteilt, die mit der Diensteinheit (SU) im Rahmen eines virtuellen, elektronischen Marktplatzes für Informationsübermittlung (VMP) interagieren, wobei die elektronischen Agenten (A1 bis A3) jeweils einem der Netzbetreiber zugeordnet sind und Entscheidungen im Rahmen des elektronischen Marktplatzes für Informationen (VMP) mittels einer Entscheidungslogik (DL) gemäß von dem jeweiligen Netzbetreiber spezifizierten Kriterien (KD) treffen, daß die Diensteinheit (SU) die elektronischen Agenten (A1 bis A3) durch Interaktion im Rahmen des elektronischen Marktplatzes für Informationen (VMP) ein oder mehrfach auffordert, Angebote für die Ausführung der angeforderten Übermittlung von Informationen abzugeben, daß die Diensteinheit (SU) ein, von einem der elektronischen Agenten (A1) auf solche eine Aufforderung hin durch Interaktion im Rahmen des elektronischen Marktplatzes für Informationen (VMP) abgegebenes Angebot (OF) diesem elektronischen Agenten (A1) gegenüber als angenommen bestätigt (AC), daß die Diensteinheit (SU) die Übermittlung der Informationen über das Kommunikationsnetz (KN1) des Netzbetreibers veranlaßt, dem dieser elektronische Agent (A1) zugeordnet ist, und daß dieser elektronische Agent (A1) ausgehandelte Bedingungen (TI) für die Übertragung der Informationen über das Kommunikationsnetz (KN1) des Netzbetreibers an eine Netzwerkmanagementeinheit (BC1) dieses Netzbetreibers übermittelt.

2. Verfahren nach Anspruch 1, **dadurch gekennzeichnet, daß** die Anforderung (CR) zur Übermittlung der Informationen den Aufbau einer Kommunikationsverbindung (CC) zwischen einem rufenden Endgerät (TE1) und einem oder mehreren gerufenen Endgeräten (TE2) zur Übermittlung der Informationen über diese Kommunikationsverbindung (CC) anfordert.

3. Verfahren nach Anspruch 1, **dadurch gekennzeichnet, daß** die Anforderung zur Übermittlung der Informationen anfordert, Informationen verbindungslos von einem ersten Endgerät zu einem oder mehreren zweiten Endgeräten zu übermitteln.

4. Verfahren nach Anspruch 1, **dadurch gekennzeichnet, daß** die Diensteinheit (SU) mit einer Aufforderung (CR'), Angebote für die Ausführung der angeforderten Übermittlung von Informationen abzugeben, ein oder mehrere Bedingungen für diese Übermittlung den zwei oder mehr elektronischen Agenten (A1 bis A3) gegenüber spezifiziert.

5. Verfahren nach Anspruch 4, **dadurch gekennzeichnet, daß** die Diensteinheit (SU) die mit Aufforderungen (CR') jeweils verbundenen ein oder mehreren Bedingungen sukzessive verändert, bis einer der elektronischen Agenten (A1 bis A3) ein Angebot (OF) abgibt.

6. Verfahren nach Anspruch 1 oder Anspruch 4, **dadurch gekennzeichnet, daß** das von einem der elektronischen Agenten (A1) auf solche eine Aufforderung hin durch Interaktion im Rahmen des elektronischen Marktplatzes abgegebenes Angebot (OF) ein oder mehrere Bedingungen für diese Übermittlung der Diensteinheit (SU) gegenüber spezifiziert.

7. Verfahren nach Anspruch 4 oder Anspruch 6, **dadurch gekennzeichnet, daß** ein oder mehrere Bedingungen die Art und Weise der Übermittlung der Informationen spezifizieren.

8. Verfahren nach Anspruch 4, Anspruch 6 oder Anspruch 7, **dadurch gekennzeichnet, daß** ein oder mehrere Bedingungen die Vergebührung der Übermittlung der Informationen spezifizieren.

9. Verfahren nach Anspruch 1, **dadurch gekennzeichnet, daß** von elektronischen Agenten (A1 bis A3) auf solche eine Aufforderung (CR') hin durch Interaktion im Rahmen des elektronischen Marktplatzes abgegebene Angebote (OF) nur eine teilweise Übermittlung der Informationen betreffen und daß die Diensteinheit (SU) mehrere solcher Angebote bestätigt, so daß sich eine vollständige Übermittlung der Informationen ergibt.

10. Verfahren nach Anspruch 1, **dadurch gekennzeichnet, daß** die von dem jeweiligen Netzbetreiber spezifizierten Kriterien (KD) akzeptierbare Bedingungen bestimmen.

11. Verfahren nach Anspruch 1 oder Anspruch 10, **dadurch gekennzeichnet, daß** von dem jeweiligen Netzbetreiber spezifizierte Kriterien (KD) die Netzauslastung des Netzbetreibers betreffen.

12. Verfahren nach Anspruch 1, **dadurch gekennzeichnet, daß** elektronische Agenten (A1 bis A3) sich auf dem elektronischen Marktplatzes für Informationsübermittlung (VMP) registrieren und nur registrierte elektronische Agent (A1 bis A3) Aufforderungen von der Diensteinheit (SU) erhalten.

13. Diensteinheit (SU) zur Unterstützung der Übermittlung von Informationen über ein Kommunikationssystem (KS), das Kommunikationsnetze (KN1 bis KN3) von zwei oder mehr Netzbetreibern umfaßt,
**dadurch gekennzeichnet, daß** die Diensteinheit (SU) so ausgestaltet ist, daß sie, wenn ihr eine Anforderung (CR) zur Übermittlung von Informationen mitgeteilt wird, die Anforderung zur Übermittlung der Informationen zwei oder mehr elektronischen Agenten (A1 bis A3) mitteilt, die mit der Diensteinheit (SU) im Rahmen eines virtuellen, elektronischen Marktplatzes für Informationsübermittlung (VMP) interagieren, daß die Diensteinheit (SU) weiter so ausgestaltet ist, daß sie elektronische Agenten (A1 bis A3) durch Interaktion im Rahmen des elektronischen Marktplatzes (VMP) ein oder mehrfach auffordert, Angebote für die Ausführung der angeforderten Übermittlung von Informationen abzugeben, daß die Diensteinheit (SU) weiter so ausgestaltet ist, daß sie ein, von einem der elektronischen Agenten (A1) auf solche eine Aufforderung hin durch Interaktion im Rahmen des elektronischen Marktplatzes abgegebenes Angebot (OF) diesem elektronischen Agenten (A1) gegenüber als angenommen bestätigt (AC), und daß die Diensteinheit (SU) weiter so ausgestaltet ist, daß sie die Übermittlung der Informationen über das Kommunikationsnetz (KN1) des Netzbetreibers veranlaßt, dem dieser elektronische Agent (A1) zugeordnet ist.

14. Softwareprodukt zur Unterstützung der Übermittlung von Informationen über ein Kommunikationssystem (KS), das Kommunikationsnetze (KN1 bis KN3) von zwei oder mehr Netzbetreibern umfaßt,
**dadurch gekennzeichnet, daß** das Softwareprodukt so ausgestalltet ist, daß es bei seiner Ausführung auf einem Server (SERV) die Funktion einer Diensteinheit (SU) nach Anspruch 13 erbringt.

15. Server (SERV) zur Unterstützung der Übermittlung von Informationen über ein Kommunikationssystem (KS), das Kommunikationsnetze (KN1 bis KN3) von zwei oder mehr Netzbetreibern umfaßt,
**dadurch gekennzeichnet, daß** der Server Steuermittel aufweist, die so ausgestaltet sind daß sie die Funktionen einer Diensteinheit (SU) nach Anspruch 13 erbringen.

16. Elektronischer Agent (A1 bis A3) zur Unterstützung der Übermittlung von Informationen über ein Kommunikationssystem (KS), das Kommunikationsnetze (KN1 bis KN3) von zwei oder mehr Netzbetreibern umfaßt,
**dadurch gekennzeichnet, daß** der elektronischer Agent (A1 bis A3) so ausgestaltet ist, daß er mit einer Diensteinheit (SU), die ihm Anforderungen (CR) zur Übermittlung von Informationen mitteilt, im Rahmen eines virtuellen, elektronischen Marktplatzes für Informationsübermittlung (VMP) interagiert und Entscheidungen im Rahmen des elektronischen Marktplatzes für Informationen (VMP) mittels einer Entscheidungslogik (DL) gemäß von Kriterien (KD) trifft, die von einem Netzbetreiber, dem er zugeordnet ist, spezifizierten sind, daß der elektronische Agent (A1 bis A2) weiter so ausgestaltet ist, daß er, wenn er durch Interaktion im Rahmen des elektronischen Marktplatzes für Informationen (VMP) von der Diensteinheit (SU) aufgefordert wird, Angebote für die Ausführung der angeforderten Übermittlung von Informationen abzugeben, mittels der Entscheidungslogik (DL) gemäß der Kriterien (KD) eine Entscheidung trifft, ein Angebot auf diese Aufforderung abzugeben oder nicht, und daß der elektronische Agent (A1 bis A2) weiter so ausgestaltet ist, daß er, wenn die Diensteinheit (SU) durch Interaktion im Rahmen des elektronischen Marktplatzes für Informationen (VMP) ein von ihm abgegebenes Angebot (OF) ihm gegenüber als angenommen bestätigt, die ausgehandelte Bedingungen (TI) für die Übertragung der Informationen über das Kommunikationsnetz (KN1) des Netzbetreibers, dem er zugeordnet ist, an eine Netzwerkmanagementeinheit (BC1) dieses Netzbetreibers übermittelt.

17. Softwareprodukt zur Unterstützung der Übermittlung von Informationen über ein Kommunikationssystem (KS), das Kommunikationsnetze (KN1 bis KN3) von zwei oder mehr Netzbetreibern umfaßt,
**dadurch gekennzeichnet, daß** das Softwareprodukt so ausgestalltet ist, daß es bei seiner Ausführung auf einem Server (SERV; SERV1 bis SERV3) die Funktion eines elektronischen Agenten nach Anspruch 16 erbringt.

18. Server (SERV; SERV1 bis SERV3) zur Unterstützung der Übermittlung von Informationen über ein Kommunikationssystem (KS), das Kommunikationsnetze (KN1 bis KN3) von zwei oder mehr Netzbetreibern umfaßt,
**dadurch gekennzeichnet, daß** der Server Steuermittel aufweist, die so ausgestaltet sind daß sie die Funktionen eines elektronischen Agenten nach Anspruch 16 erbringen.

## Claims

1. Method for supporting the communication of information via a communications system (KS) which comprises communications networks (KN1 to KN3) of two or more network operators, the method being such that, prior to the communication of the information, a service unit (SU) of the communications system is contacted and a request (CR) for the communication of the information is thereupon passed to the service unit (SU), **characterized in that** the service unit (SU) passes the request for the communication of the information to two or more electronic agents (A1 to A3) which interact with the service unit (SU) within the framework of a virtual electronic marketplace (VMP) for information communication, the electronic agents (A1 to A3) being respectively assigned to one of the network operators and making decisions, within the framework of the electronic marketplace for (VMP) for information, by means of a decision logic (DL), according to criteria (KD) specified by the respective network operator, the service unit (SU), prompts the electronic agents (A1 to A3), once or several times, through interaction within the framework of the electronic marketplace (VMP) for information, to submit offers for the execution of the requested communication of information, an offer (OF) submitted by one of the electronic agents (A1) in response to such a prompt, through interaction within the framework of the electronic marketplace (VMP) for information, is confirmed (AC) to this electronic agent (A1) by the service unit (SU) as having been accepted, the service unit (SU) initiates the communication of the information via the communications network (KN1) of the network operator to whom this electronic agent (A1) is assigned, and this electronic agent (A1) communicates negotiated conditions (TI) for the transmission of the information via the communications network (KN1) of the network operator to the network management unit (BC1) of this network operator.

2. Method according to Claim 1, **characterized in that** the request (CR) for the communication of the information requests the establishment of a communication connection (CC) between a calling terminal (TE1) and one or more called terminals (TE2) for the communication of the information via this communication connection (CC).

3. Method according to Claim 1, **characterized in that** the request for the communication of the information requests connectionless communication of information from a first terminal to one or more second terminals.

4. Method according to Claim 1, **characterized in that**, with a prompt (CR') to submit offers for the execution of the requested communication of information, the service unit (SU) specifies to the two or more electronic agents (A1 to A3) one or more conditions for this communication.

5. Method according to Claim 4, **characterized in that** the service unit (SU) successively alters one or more of the conditions, respectively associated with prompts (CR'), until one of the electronic agents (A1 to A3) submits an offer (OF).

6. Method according to Claim 1 or Claim 4, **characterized in that** the offer (OF) submitted by one of the electronic agents (A1) in response to such a prompt, through interaction within the framework of the electronic marketplace, specifies to the service unit (SU) one or more conditions for this communication.

7. Method according to Claim 4 or Claim 6, **characterized in that** one or more conditions specify the nature and manner of the communication of the information.

8. Method according to Claim 4, Claim 6 or Claim 7, **characterized in that** one or more conditions specify the charging of the communication of the information.

9. Method according to Claim 1, **characterized in that** offers (OF) submitted by electronic agents (A1 to A3) in response to such a prompt (CR'), through interaction within the framework of the electronic marketplace, relate only to a partial communication of the information and the service unit (SU) confirms several such offers, so that a complete communication of the information results.

10. Method according to Claim 1, **characterized in that** criteria (KD) specified by the respective network operator determine acceptable conditions.

11. Method according to Claim 1 or Claim 10, **characterized in that** criteria (KD) specified by the respective network operator relate to the network loading of the network operator.

12. Method according to Claim 1, **characterized in that** electronic agents (A1 to A3) register themselves on the electronic marketplace (VMP) for information communication and only registered electronic agents (A1 to A3) receive prompts from the service unit (SU).

13. Service unit (SU) for supporting the communication of information via a communications system (KS) which comprises communications networks (KN1 to KN3) of two or more network operators, **characterized in that** the service unit (SU) is of such design that, when a request (CR) for the communication of information is passed to it, it passes the request for the communication of the information to two or more electronic agents (A1 to A3) which interact with the service unit (SU) within the framework of a virtual electronic marketplace (VMP) for information communication, the service unit (SU) is furthermore of such design that, through interaction within the framework of the electronic marketplace (VMP), it prompts electronic agents (A1 to A3), once or several times, to submit offers for the execution of the requested communication of information, the service unit (SU) is furthermore of such design that an offer (OF) submitted by one of the electronic agents (A1) in response to such a request, through interaction within the framework of the electronic marketplace, is confirmed (AC) to this electronic agent (A1) by it as having been accepted, and the service unit (SU) is furthermore of such design that it initiates the communication of the information via the communications network (KN1) of the network operator to whom this electronic agent (A1) is assigned.

14. Software product for supporting the communication of information via a communications system (KS) which comprises communications networks (KN1 to KN3) of two or more network operators, **characterized in that** the software product is of such design that, in its execution on a server (SERV), it performs the function of a service unit (SU) according to Claim 13.

15. Server (SERV) for supporting the communication of information via a communications system (KS) which comprises communications networks (KN1 to KN3) of two or more network operators, **characterized in that** the server comprises control means which are of such design that they perform the functions of a service unit (SU) according to Claim 13.

16. Electronic agent (A1 to A3) for supporting the communication of information via a communications system (KS) which comprises communications networks (KN1 to KN3) of two or more network operators, **characterized in that** the electronic agent (A1 to A3) is of such design that it interacts, within the framework of a virtual electronic marketplace (VMP) for information communication, with a service unit (SU) which passes to it requests (CR) for the communication of information and, within the framework of the electronic marketplace (VMP) for information, makes decisions, by means of a decision logic (DL), according to criteria (KD) which are specified by a network operator to whom it is assigned, and the electronic agent (A1 to A2) is furthermore of such design that when it is prompted by the service unit (SU), through interaction within the framework of the electronic marketplace (VMP) for information, to submit offers for the execution of the requested communication of information, it makes a decision, by means of the decision logic (DL), according to the criteria (KD), to submit or not to submit an offer in response to this prompt, and the electronic agent (A1 to A2) is furthermore of such design that when, through interaction within the framework of the electronic marketplace (VMP) for information, an offer (OF) submitted by it is confirmed to it by the service unit (SU) as having been accepted, it communicates the negotiated conditions (TI) for the transmission of the information via the communications network (KN1) of the network operator to whom it is assigned to a network management unit (BC1) of this network operator.

17. Software product for supporting the communication of information via a communications system (KS) which comprises communications networks (KN1 to KN3) of two or more network operators, **characterized in that** the software product is of such design that, in its execution on a server (SERV; SERV1 to SERV3), it performs the function of an electronic agent according to Claim 16.

18. Server (SERV; SERV1 to SERV3) for supporting the communication of information via a communications system (KS) which comprises communications networks (KN1 to KN3) of two or more network operators, **characterized in that** the server comprises control means which are of such design that they perform the functions of an electronic agent according to Claim 16.

## Revendications

1. Méthode afin de supporter le transfert d'informations via un système de communication (SC), qui comprend des réseaux de communication (RC1 à RC3) de deux opérateurs de réseaux ou plus, où lors de la procédure de transfert des informations, une unité de service (SU) du système de communication est contactée et où l'unité de service (SU) reçoit une demande (CR) de transfert des informations, **se caractérisant par le fait que** l'unité de service (SU) communique la demande de transfert des informations à deux agents électroniques ou plus (A1 à A3) qui interagissent avec l'unité de service (SU) dans le cadre d'une place de marché virtuelle, électronique pour le transfert d'informations (VMP), les agents électroniques (A1 à A3) étant affectés à chaque fois à un des opérateurs de réseaux et prenant des décisions dans le cadre de la place de marché électronique pour les informations (VMP) à l'aide d'une logique décisionnelle (DL) selon des critères (KD) spécifiés par l'opérateur de réseau concerné, que l'unité de service (SU) exhorte une ou plusieurs fois les agents électroniques (A1 à A3) par interaction dans le cadre de la place de marché électronique pour les informations (VMP) à soumettre des offres pour l'exécution du transfert demandé d'informations, que l'unité de service (SU) confirme comme étant acceptée (AC) une offre (OF) soumise par un des agents électroniques (A1) en réponse à une telle exhortation, par interaction dans le cadre de la place de marché électronique pour les informations (VMP) à cet agent électronique (A1), que l'unité de service (SU) procède au transfert procède au transfert des informations via le réseau de communication (RC1) de l'opérateur de réseau auquel cet agent électronique (A1) est affecté et que cet agent électronique (A1) transmet des conditions négociées (T1) pour le transfert des informations via le réseau de communication (RC1) de l'opérateur de réseau à une unité de gestion de réseau (BC1) de cet opérateur de réseau.

2. Méthode selon la revendication 1, **se caractérisant par le fait que** la demande (CR) de transfert des informations stipule l'établissement d'une connexion de communication (CC) entre un terminal appelant (TE1) et un ou plusieurs terminaux appelés (TE2) pour le transfert des informations via cette connexion de communication (CC).

3. Méthode selon la revendication 1, **se caractérisant par le fait que** la demande de transfert des informations stipule la transmission d'informations sans connexion d'un premier terminal à un deuxième terminal ou à plusieurs terminaux.

4. Méthode selon la revendication 1, **se caractérisant par le fait que** l'unité de service (SU) spécifie une ou plusieurs conditions pour ce transfert à deux agents électroniques (A1 à A3) ou plus, avec une exhortation (CR') à soumettre des offres pour l'exécution du transfert demandé d'informations.

5. Méthode selon la revendication 4, **se caractérisant par le fait que** l'unité de service (SU) modifie successivement une ou plusieurs conditions liées à des exhortations (CR') jusqu'à ce qu'un des agents électroniques (A1 à A3) soumette une offre (OF).

6. Méthode selon la revendication 1 ou la revendication 4, **se caractérisant par le fait que** l'offre (OF) soumise par un des agents électroniques (A1) répondant à une telle exhortation, par interaction dans le cadre de la place de marché électronique spécifie une ou plusieurs conditions pour ce transfert à l'unité de service (SU).

7. Méthode selon la revendication 4 ou la revendication 6, **se caractérisant par le fait qu'**une ou plusieurs conditions spécifient la nature et le mode de transfert des informations.

8. Méthode selon la revendication 4, la revendication 6 ou la revendication 7, **se caractérisant par le fait qu'**une ou plusieurs conditions spécifient la taxation du transfert des informations.

9. Méthode selon la revendication 1, **se caractérisant par le fait que** les offres (OF) soumises par des agents électroniques (A1 à A3) en réponse à une telle exhortation (CR'), par interaction dans le cadre de la place de marché électronique, ne concernent qu'un transfert partiel des informations et que l'unité de service (SU) confirme plusieurs de ces offres, entraînant un transfert intégral des informations.

10. Méthode selon la revendication 1, **se caractérisant par le fait que** les critères (KD) spécifiés par l'opérateur de réseau concerné déterminent des conditions acceptables.

11. Méthode selon la revendication 1 ou la revendication 10, **se caractérisant par le fait que** les critères (KD) spécifiés par l'opérateur de réseau concerné portent sur l'utilisation du réseau de l'opérateur de réseau.

12. Méthode selon la revendication 1, **se caractérisant par le fait que** des agents électroniques (A1 à A3) s'enregistrent sur la place de marché électronique pour le transfert d'informations (VMP) et que seul les agents électroniques enregistrés (A1 à A3) reçoivent des exhortations de l'unité de service (SU).

13. Unité de service (SU) pour supporter le transfert d'informations via un système de communication (CS), qui comprend des réseaux de communication (RC1 à RC3) de deux opérateurs de réseaux ou plus, **se caractérisant par le fait que** l'unité de service (SU) est configurée de façon à envoyer, après avoir reçu elle-même une demande (CR) de transfert d'informations, la demande de transfert d'informations à deux agents électroniques (A1 à A3) ou plus, qui interagissent avec l'unité de service (SU) dans le cadre d'une place de marché virtuelle, électronique pour le transfert d'informations (VMP), que l'unité de service (SU) est en outre configurée de façon à exhorter une ou plusieurs fois des agents électroniques (A1 à A3) par interaction dans le cadre de la place de marché électronique (VMP) à soumettre des offres pour l'exécution du transfert demandé d'informations, que l'unité de service (SU) est en outre configurée de façon à confirmer comme étant acceptée (AC) l'offre (OF) soumise par un des agents électroniques (A1) en réponse à une telle exhortation par interaction dans le cadre de la place de marché électronique à cet agent électronique, et que l'unité de service (SU) est en outre configurée de façon à procéder au transfert des informations via le réseau de communication (RC1) de l'opérateur de réseau auquel cet agent électronique (A1) est affecté.

14. Logiciel pour supporter le transfert d'informations via un système de communication (SC), qui comprend des réseaux de communications (RC1 à RC3) de deux opérateurs de réseaux ou plus, **se caractérisant par le fait que** le logiciel est configuré de façon à offrir la fonction d'une unité de service (SU) selon la revendication 13 lors de son exécution sur un serveur (SERV).

15. Serveur (SERV) pour supporter le transfert d'informations via un système de communication (SC) qui comprend des réseaux de communication (RC1 à RC3) de deux opérateurs de réseaux ou plus, **se caractérisant par le fait que** le serveur possède des commandes configurées de façon à offrir les fonctions d'une unité de service (SU) selon la revendication 13.

16. Agent électronique (A1 à A3) pour supporter le transfert d'informations via un système de communication (SC) qui comprend des réseaux de communication (RC1 à RC3) de deux opérateurs de réseaux ou plus, **se caractérisant par le fait que** l'agent électronique (A1 à A3) est configuré de façon à interagir avec une unité de service (SU) qui lui communique des demandes (CR) de transfert d'informations, dans le cadre d'une place de marché virtuelle, électronique pour le transfert d'informations (VMP) et prend des décisions dans le cadre de la place de marché électroniques pour des informations (VMP) à l'aide d'une logique décisionnelle (DL) selon des critères (KD) spécifiés par un opérateur de réseau auquel il est affecté, que l'agent électronique (A1 à A2) est en outre configuré de façon à décider, lorsqu'il est exhorté par interaction dans le cadre de la place de marché électronique pour des informations (VMP) par l'unité de service (SU) à soumettre des offres pour l'exécution du transfert demandé d'informations, à l'aide de la logique décisionnelle (DL) selon les critères (KD), de soumettre ou non une offre en réponse à cette exhortation, et que l'agent électronique (A1 à A2) est en outre configuré de façon à transmettre à une unité de gestion de réseau (BC1) les conditions négociées (TI) pour le transfert des informations via le réseau de communication (RC1) de l'opérateur de réseau auquel il est affecté, lorsque l'unité de service (SU) lui confirme une offre (OF) déposée par lui comme étant acceptée, par interaction dans le cadre de la place de marché électronique pour des informations (VMP).

17. Logiciel pour supporter le transfert d'informations via un système de communication (SC) qui comprend des réseaux de communication (RC1 à RC3) de deux opérateurs de réseaux ou plus, **se caractérisant par le fait que** le logiciel est configuré de façon à offrir la fonction d'un agent électronique selon la revendication 16 lors de son exécution sur un serveur (SERV ; SERV1 à SERV3).

18. Serveur (SERV ; SERV1 à SERV3) pour supporter le transfert d'informations via un système de communication (SC) qui comprend des réseaux de communication (RC1 à RC3) de deux opérateurs de réseaux ou plus, **se caractérisant par le fait que** le serveur possède des commandes configurées de façon à offrir les fonctions d'un agent électronique selon la revendication 16.
